# EUROPÄISCHE PATENTSCHRIFT

(11) **EP 1 829 715 B1**
(45) Veröffentlichungstag und Bekanntmachung des Hinweises auf die Patenterteilung: **11.02.2009**
(21) Anmeldenummer: 07103176.9
(22) Anmeldetag: 27.02.2007
(51) Int. Cl.: B60D 1/14, B60D 1/155

(54) **Gehäuse eines Teleskoplenkers**
Casing of a telescope guide
Boîtier d'un guide de télescope

(30) Priorität: 02.03.2006 DE 102006009673
(43) Veröffentlichungstag der Anmeldung: 05.09.2007
(73) Patentinhaber: Deere & Company, Moline, IL 61265-8098 (US)
(72) Erfinder: Vergara, Daniel, 28820, Madrid (ES); Zahn, Werner, 67454, Hassloch (DE)
(74) Vertreter: Magin, Ludwig Bernhard

(56) Entgegenhaltungen:
- EP-A1- 0 872 365
- DE-C1- 19 849 061
- US-A- 3 279 819
- US-A- 5 327 978

## Beschreibung

Die Erfindung betrifft ein Gehäuse eines Teleskoplenkers einer Anhängevorrichtung für ein landwirtschaftliches Gerät, mit einer Rasteinrichtung zur Fixierung des Lenkers im Gehäuse, wobei das Gehäuse durch einen ersten Gehäuseteil und einen zweiten Gehäuseteil ausgebildet ist, welche miteinander verschweißt sind und einen eine Öffnung aufweisenden Hohlraum zur verschiebbaren Aufnahme des Lenkers bilden, wobei der Hohlraum des Gehäuses durch eine erste und dritte sich gegenüberliegende Seitenwand, eine zweite und vierte sich gegenüberliegende Seitenwand und eine der Öffnung gegenüberliegende Abschlusswand ausgebildet ist, wobei der erste Gehäuseteil einen die Abschlusswand des Hohlraums enthaltenen Anschlussbereich für das Gehäuse umfasst, wobei die erste und dritte Seitenwand einen größeren Abstand zueinander aufweisen als die zweite und vierte Seitenwand, wobei eine den ersten und den zweiten Gehäuseteil verbindende Schweißnaht entlang der ersten, zweiten und dritten Seitenwand verläuft, wobei eine Trennebene zwischen den beiden Gehäuseteilen im Wesentlichen in Richtung der Längsachse des Gehäuses ausgebildet ist und wobei die Längsachse des Gehäuses senkrecht zu der ersten und dritten Seitenwand verläuft.

Im Stand der Technik sind so genannte Teleskoplenker bekannt, die an Anhängevorrichtungen für landwirtschaftliche Geräte, welche von einem Schlepper gezogen werden, beispielsweise an Dreipunkt-Anhängevorrichtungen, Anwendung finden. Durch den Einsatz so genannter Teleskoplenker braucht der Bediener des Schleppers die Verbindungspunkte des Anhängegerätes nicht genau anfahren und kann durch Entrasten einer Rasteinrichtung für den Lenker an seinem Gehäuse, diesen ausfahren (teleskopieren) und mit dem Anhängegerät verbinden. Anschließend muss der Bediener nur den Schlepper in Richtung des Anhängegerätes bewegen, so dass die Lenker in das Gehäuse eingefahren und durch die Rasteinrichtung wieder fixiert werden.

Derartige Lenker weisen einen rechteckigen Querschnitt auf, so dass auch das Gehäuse bzw. der Hohlraum des Gehäuses, in dem der Lenker gelagert bzw. geführt ist, einen lang gezogenen rechteckigen Querschnitt auf. Das Gehäuse wird aus zwei im Wesentlichen symmetrisch ausgebildeten Hälften geformt, die miteinander verschweißt sind, wobei die beiden Hälften als Schmiedeteile ausgebildet sind. Die Schweißnaht, die die beiden Hälften miteinander verbindet, verläuft bei den im Stand der Technik bekannten Ausführungen beidseitig auf den Seitenflächen der langen Seite des Rechteckquerschnitts und auf der Abschlusswand des Hohlraums, wobei ein Anschlussbereich für das Gehäuse, zum Verbinden mit einem festen Führungslenker der Anhängevorrichtung, an der Abschlusswand vorgesehen ist und durch Zusammenschweißen der beiden Hälften gebildet wird. Die beiden Schmiedeteile weisen eine entsprechend dem lang gezogenen Format des Gehäusequerschnitts einen hohen Umformgrad beim Schmiedeprozess auf. Dies wiederum führt zu aufwändigen Schmiedeprozessen, einem hohen Wartungsaufwand für das Schmiedewerkzeug und entsprechend notwendigen Nachbearbeitungen durch Fräsen, um erforderliche Toleranzen,zu erzielen. Des Weiteren müssen die an dem Gehäuse vorgesehenen Rasteinrichtungen durch aufwändige zusätzliche Fertigungsschritte installiert werden. Die installierten Rasteinrichtungen sind zudem durch zusätzliche Befestigungsmittel, wie z. B. Schraubverbindungen, mit dem Gehäuse verbunden, wodurch eine große Teilevielfalt gegeben ist.

Die US 5,327,978 A offenbart ein Gehäuse nach dem Oberbegriff des Anspruchs 1 mit einer weiteren Ausführungsform eines Teleskoplenkers. Dieser weist einen mit einem Gehäuse ausgebildeten und mit einem Traktor verbundenen ersten Verbindungsteil und einen mit einem Anbaugerät verbundenen zweiten Verbindungsteil auf, der verschiebbar in dem Gehäuse des ersten Verbindungsteils aufgenommen ist. Das Gehäuse des ersten Verbindungsteils weist einen rechteckförmigen Querschnitt auf, der durch vier Seitenwände begrenzt wird welche durch einen ersten und einen zweiten Gehäuseteil gebildet werden, wobei der erste Gehäuseteil eine erste, zweite und dritte Seitenwand und der zweite Gehäuseteil die vierte Seitenwand des Querschnitts bilden. Dadurch ergeben sich auch hier dahingehend Nachteile, dass der erste als Schmiedeteil ausgebildete Gehäuseteil, der drei der vier Seitenwände des Gehäuses beinhaltet, aufgrund des rechteckigen Querschnitts des Gehäuses einen relativ hohen ausfallenden Umformgrad beim Schmiedeprozess aufweist. Dies wiederum führt zu einem aufwändigen Schmiedeprozessen, einem hohen Wartungsaufwand für das Schmiedewerkzeug und entsprechend notwendigen Nachbearbeitungen durch Fräsen, um erforderliche Toleranzen zu erzielen.

Die der Erfindung zugrunde liegende Aufgabe wird darin gesehen, ein Gehäuse für einen Teleskoplenker zu schaffen durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Gehäuse der eingangs genannten Art derart ausgebildet, dass der erste Gehäuseteil Teile der ersten und der dritten Seitenwand sowie die vierte Seitenwand und den Anschlussbereich bilden und der zweite Gehäuseteil Teile der ersten und der dritten Seitenwand sowie die zweite Seitenwand bilden. Durch diese Anordnung wird es möglich, die Gehäuseteile mit einem im Wesentlichen flachen Profil auszubilden, so dass die Gehäuseteile relativ flache Schmiedeteile darstellen, die in einem entsprechend einfacheren Schmiedeprozess herstellbar sind. Die Schweißnaht zwischen den Teilbereichen der ersten und dritten Seitenwand wird in einem Bereich, der zwischen der Öffnung und dem Anschlussbereich liegt, mittig zur Seitenwand angeordnet. Die Abschlusswand wird mit dem Anschlussbereich durch das erste Gehäuseteil ausgebildet, wodurch die beiden Gehäuseteile asymmetrisch formbar sind und die Schweißnaht nicht entlang der Abschlusswand verläuft, sondern über eine weitere Seitenwand geführt wird. Die Trennebene wird in Richtung der Längsachse ausgerichtet. Aufgrund dieser Merkmale können die Gehäuseteile als Schmiedeteile mit sehr geringem Umformgrad gefertigt werden, so dass die Schmiedeteile bzw. Gehäuseteile ein relativ flaches Profil aufweisen. Dies ermöglicht Schmiedeprozesse mit geringem Wartungsaufwand für das Schmiedewerkzeug und höheren erzielbaren Toleranzgenauigkeiten, so dass Nachbearbeitungsprozesse reduziert werden können oder gar entfallen.

Die Trennebene im Bereich des Anschlussbereichs verläuft vorzugsweise außermittig des Anschlussbereichs, so dass im Bereich des Anschlussbereichs die Schweißnaht zwischen der zweiten Seitenfläche und dem Anschlussbereich seitlich des Anschlussbereichs angeordnet ist. Dies hat den Vorteil, dass durch den Teleskoplenker eingeleitete dynamische Kraftlinien im Anschlussbereich des Gehäuses nicht im Bereich der Schweißnaht verlaufen.

An einer Seitenwand des Hohlraums ist eine Öffnung für die Rasteinrichtung vorgesehen ist, wobei die Öffnung von einer sich nach außen erstreckenden und mit wenigstens einer Befestigungsnut versehenen Erhebung umgeben ist. Die Erhebung stellt einen Kranz oder Flansch dar, an dem die Rasteinrichtung befestigt werden kann.

Die Rasteinrichtung weist eine Abdeckung mit einem eine Bördelung aufweisenden Rand auf, wobei die Bördelung in die Befestigungsnut eingreift und die Rasteinrichtung an der Erhebung fixiert. Die Abdeckung kann in Form eines Deckels oder eines Topfes oder einer Haube ausgebildet sein und ist vorzugsweise aus Blech geformt. Die Abdeckung umfasst einen Bereich auf, der im Wesentlichen einen Querschnitt entsprechend der Größe und Form der Erhebung aufweist, so dass die Abdeckung formschlüssig über die Erhebung geschoben werden kann. Durch entsprechendes Bördeln des Randes der Abdeckung im Bereich der Befestigungsnut an der Erhebung kann eine Fixierung der Abdeckung erzielt werden, wenn die Abdeckung über die Erhebung geschoben wird. Dabei wird eine Bördelung vorzugsweise an gegenüberliegenden Randbereichen der Abdeckung vorgenommen, wobei entsprechende Befestigungsnuten an gegenüberliegenden Bereichen der Erhebung vorgesehen sind. Dadurch entfallen aufwändige Befestigungsmaßnahmen wie z.B. durch Verschraubungen, die einen zusätzlichen Fertigungsschritt bei der Fertigung des Gehäuses erfordern würden.

Die Rasteinrichtung weist einen federvorgespannten Rastbolzen auf, welcher in der Abdeckung gelagert ist. Der Rastbolzen wird dabei von einer Bolzenstange geführt, die sich durch die Abdeckung erstreckt und ein Entrasten des Rastbolzens ermöglicht, wobei zwischen Rastbolzen und Abdeckung auf der Bolzenstange eine Spannfeder angeordnet ist, die den Rastbolzen in Einrastposition vorspannt.

Ausgehend von der Öffnung für die Rasteinrichtung sind an den Seitenwänden des Hohlraums Führungsnuten ausgebildet, in denen der Rastbolzen verschiebbar gelagert ist. Durch den vorteilhaften geringen Umformgrad der Gehäuseteile können diese Führungsnuten mit der notwendigen Toleranzgenauigkeit direkt im Schmiedeprozess endgefertigt werden, so dass ein aufwändiger Fräsprozess entfällt.

Die Öffnung für die Rasteinrichtung kann prinzipiell an jeder Seitenwand vorgesehen werden, wobei aus Gründen der Handhabung für den Bediener die Öffnung auf der ersten Seitenwand und die Führungsnuten an der zweiten und vierten Seitenwand ausgebildet sind und somit die Rasteinrichtung in Längsrichtung bedienbar und gelagert ist, so dass eine möglichst tiefe Rastposition, dass heißt eine Position des Rastbolzens mit tiefem Eingriff in den zu fixierenden Teleskoplenker ermöglicht wird.

Das Gehäuse, welches zur Aufnahme des Teleskoplenkers verwendet wird ist durch Schweißverbindung mit einem Lenker der Anhängevorrichtung verbunden, wobei der Anschlussbereich derart ausgebildet ist, dass eine Stoßverbindung des Anschlussbereichs mit dem Lenker ermöglicht wird. Der Anschlussbereich des Gehäuses ist vorzugsweise massiv durch eine relativ große Materialanhäufung ausgebildet, um Verformungen beim Schweißen zu verhindern, die zu Toleranzfehler bei der Rastbolzenführung führen können.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht von oben eines erfindungsgemäßen Gehäuses mit Teleskoplenker,
- Fig. 2: eine perspektivische Ansicht von unten des erfindungsgemäßen Gehäuses mit Teleskoplenker,
- Fig. 3: eine Querschnittansicht des Gehäuses aus Figur 1 und Figur 2 von oben, mit dargestelltem Teleskoplenker,
- Fig. 4: eine perspektivische Ansicht der Innenseite eines ersten Gehäuseteils,
- Fig. 5: eine perspektivische Ansicht der Innenseite eines zweiten Gehäuseteils,
- Fig. 6: eine Querschnittansicht des Gehäuses aus Figur 1 entlang der Schnittebene A-A aus Figur 1 mit einer Rasteinrichtung und
- Fig. 7: eine perspektivische Ansicht des Gehäuses von oben mit einer Teilquerschnittdarstellung der Rasteinrichtung aus Figur 6.

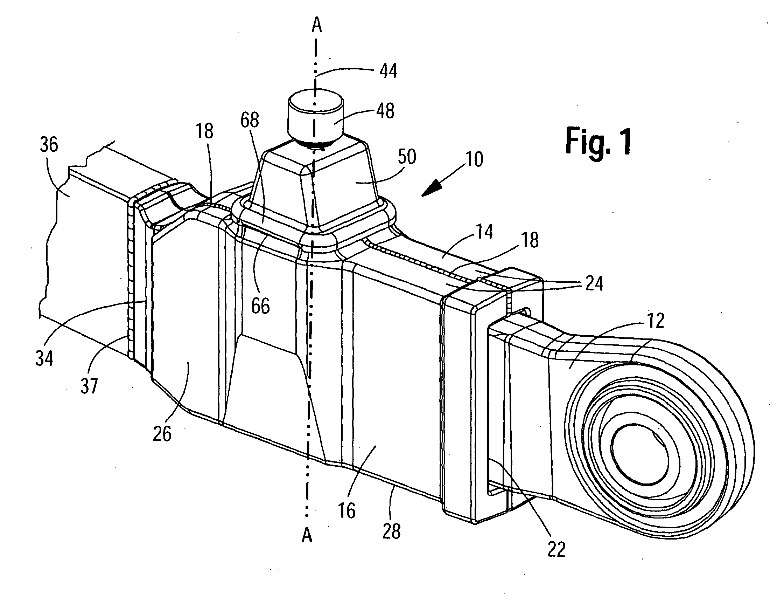

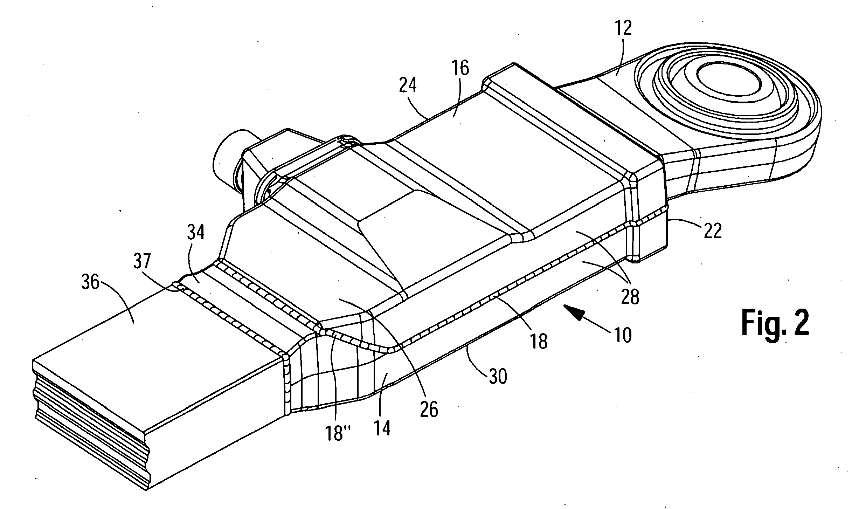

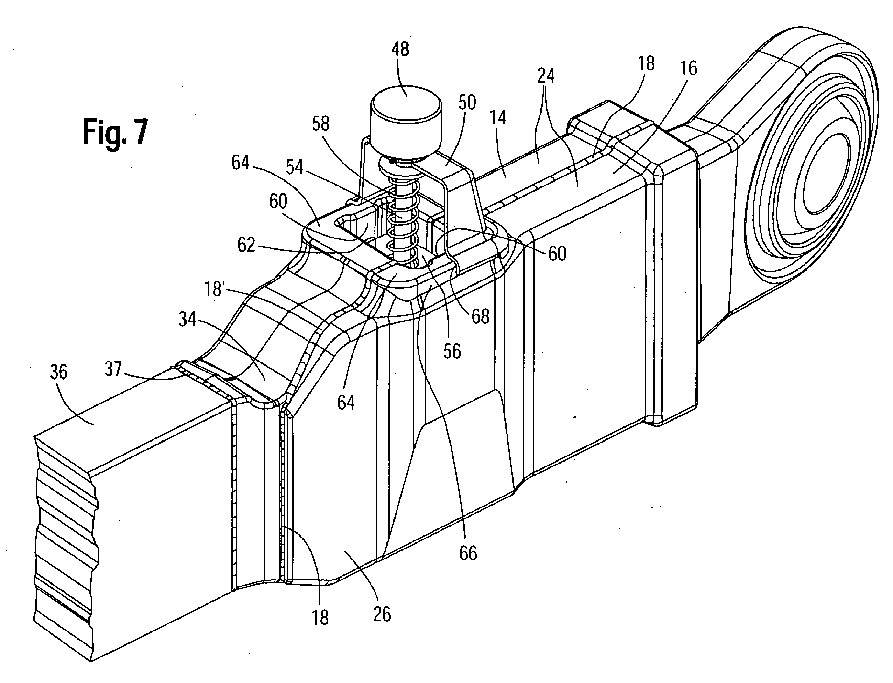

Die Figuren 1 bis 7 zeigen ein Ausführungsbeispiel eines erfindungsgemäßen Gehäuses 10 für einen Teleskoplenker 12. Derartige Teleskoplenkergehäuse 10 finden in Anhängevorrichtungen für landwirtschaftliche Geräte (nicht gezeigt) Anwendung, beispielsweise in einer Dreipunktanhängevorrichtung an einem landwirtschaftlichen Schlepper (nicht gezeigt).

Das Gehäuse 10 umfasst einen ersten Gehäuseteil 14 und einen zweiten Gehäuseteil 16, die über eine Schweißnaht 18 miteinander verbunden sind. Das Gehäuse 10 umfasst einen Hohlraum 20, in dem der Teleskoplenker 12 verschiebbar gelagert ist.

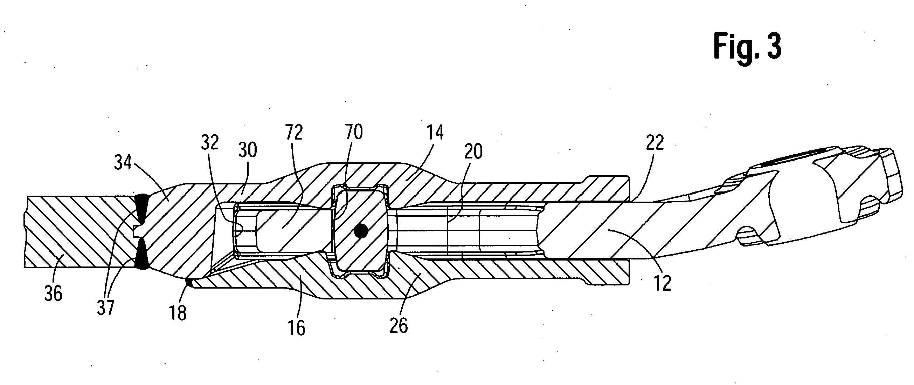

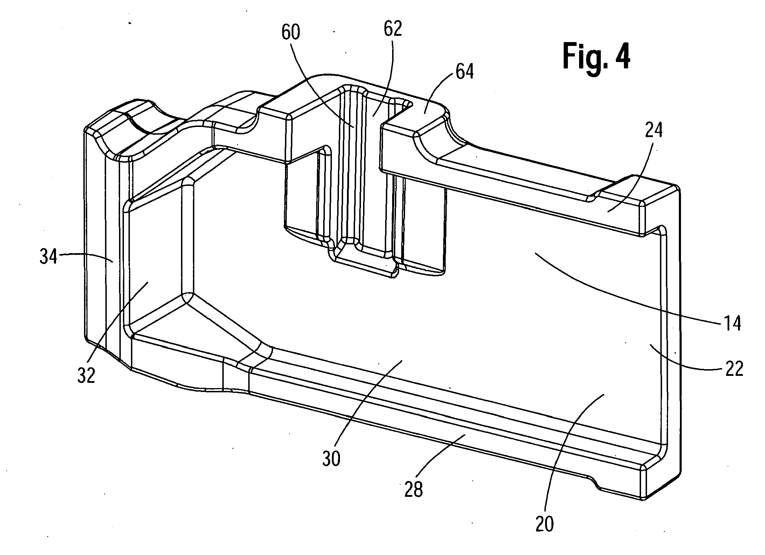

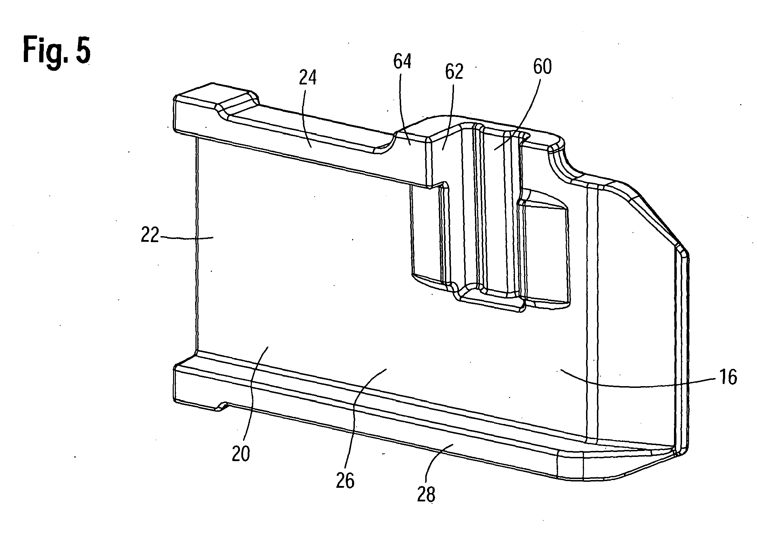

Der Hohlraum 20 weist eine Öffnung 22 auf, in die der Teleskoplenker 12 eingeführt wird. Ferner wird der Hohlraum 20 von einer ersten Seitenwand 24 (Figur 4), einer zweiten Seitenwand 26 (Figur 5), einer dritten Seitenwand 28, einer vierten Seitenwand 30 sowie einer Abschlusswand 32 umgeben (siehe Figuren 3 bis 5). Die erste und die dritte Seitenwand 24, 28, die zweite und die vierte Seitenwand 26, 30 sowie die Öffnung und die Abschlusswand 22, 32 sind jeweils gegenüberliegend angeordnet.

Der erste und zweite Gehäuseteil 14, 16 sind jeweils als Flachprofil ausgebildete Schmiedeteile, wobei alternative Fertigungstechniken möglich sind und die Gehäuseteile 14, 16 auch beispielsweise als Gussteile ausgebildet sein können.

Wie der Figur 4 zu entnehmen ist, ist der erste Gehäuseteil 14 derart ausgeformt, dass er einen ersten Teilbereich der Öffnung 22, einen ersten Teilbereich der ersten und dritten Seitenwand 24, 28, die gesamte vierte Seitenwand 30 sowie die gesamte Abschlusswand 32 umfasst. Die Abschlusswand 32 wird dabei durch die Innenseite eines massiv am ersten Gehäuseteil 14 ausgeformten Anschlussbereich 34 ausgebildet, welcher zur Verbindung mit einem Lenker 36 einer Anhängevorrichtung (nicht gezeigt) dient. Die Verbindung zu dem Lenker 36 der Anhängevorrichtung wird über eine Schweißverbindung 37 hergestellt.

Wie der Figur 5 zu entnehmen ist, ist der zweite Gehäuseteil 14 derart ausgeformt, dass er den zweiten Teilbereich der Öffnung 22, einen zweiten Teilbereich der ersten und dritten Seitenwand 24, 28 und die gesamte zweite Seitenwand 26 umfasst.

Die Öffnung 22, die erste Seitenwand 24 sowie die dritte Seitenwand 28 werden durch die oben genannten entsprechenden ersten und zweiten Teilbereiche vervollständigt.

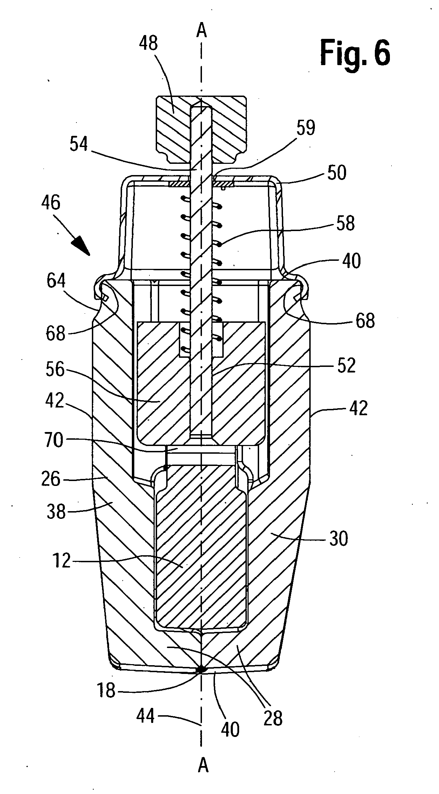

Wie den Figuren 1, 2 und 4 bis 6 zu entnehmen ist, wird durch das erste und zweite Gehäuseteil 14, 16 eine mit einem im Wesentlichen rechteckförmigen Querschnitt 38 ausgestattete Konfiguration des Hohlraums 20 geschaffen, wobei die erste und dritte Seitenwand 24, 28 auf den kurzen Seiten 40 des rechteckigen Querschnitts 38, bzw. oben und unten bezüglich der Figuren 1, 4 bis 6, und die zweite und vierte Seitenwand 26, 30 auf den langen Seiten 42 des rechteckigen Querschnitts 38, bzw. rechts und links bezüglich der Figur 6, ausgebildet sind. Die Trennebene der beiden Gehäuseteile 14, 16 erstreckt sich dabei in Richtung der Längsachse 44 des Querschnitts 38. Durch diese Anordnung der Trennebene der beiden Gehäuseteile 14, 16 wird es möglich, die Gehäuseteile 14, 16 mit einem im Wesentlichen flachen Profil auszubilden, so dass die Gehäuseteile 14, 16 relativ flache Schmiedeteile darstellen, die in einem entsprechend einfacheren Schmiedeprozess herstellbar sind.

Die Schweißnaht 18 zwischen den Teilbereichen der ersten und dritten Seitenwand 24, 28 wird in einem Bereich der zwischen der Öffnung 22 und dem Anschlussbereich 34 liegt mittig zur Seitenwand 24, 28 angeordnet. Da der die Abschlusswand 32 umfassende Anschlussbereich 34 als Teil des ersten Gehäuseteils 14 ausgebildet ist, wird die Schweißnaht 18, 18', 18" im Bereich des Anschlussbereichs 34 außermittig zum Anschlussbereich 34 zwischen dem Anschlussbereich 34 und der zweiten Seitenwand 26 geführt, so dass die Schweißnaht seitlich des Anschlussbereichs 34, und zwar auf der der zweiten Seitenfläche 26 zugewandten Seite verläuft. Die Trennebene im Bereich des Anschlussbereichs 34 verläuft somit außermittig des Anschlussbereichs 34, mit dem Vorteil, dass in das Gehäuse 10 eingeleitete dynamische Kraftlinien im Anschlussbereich 34 nicht im Bereich der Schweißnaht verlaufen.

Wie in den Figuren 1 bis 3 sowie 6 und 7 dargestellt ist, ist das Gehäuse 10 mit einer Rasteinrichtung 46 versehen. Die Rasteinrichtung 46 weist einen Griff 48, eine Abdeckung 50, und einen Rastbolzen 52 auf. Der Rastbolzen 52 umfasst eine Führungsstange 54 und einen Rastblock 56. Zwischen der Abdeckung 50 und dem Rastblock 56 ist auf der Führungsstange 54 eine Vorspannfeder 58 gelagert, durch die der Rastbolzen 52 in das Gehäuse 10 gezwungen wird, wobei die Führungsstange 54 durch eine in der Abdeckung 50 ausgebildete Bohrung 59 geführt und mit dem Griff 48 verbunden ist.

Die Gehäuseteile 14, 16 sind mit einer Führungsnut 60 ausgebildet, die sich in einem benachbart zur Abschlusswand 32 liegenden Bereich innerhalb der oberen Hälfte der Gehäuseteile 14, 16 in Richtung der Längsachse 44 zur ersten Seitenwand 24 erstrecken und in eine auf der ersten Seitenwand 24 ausgebildeten Öffnung 62 münden. Die Führungsnuten 60 sind auf den Querschnitt des Rastblocks 56 angepasst und derart ausgebildet, dass der Rastblock 56 durch die Führungsnuten 60 verschiebbar gelagert wird.

Die Öffnung 62 der Führungsnuten 60 ist von einer Erhebung 64 auf der Oberseite der ersten Seitenwand 24 umgeben, wobei die Erhebung 64 einen Befestigungsflansch für die Abdeckung 50 darstellt. An den der zweiten und vierten Seitenwand 26, 30 zugewandten Seiten der Erhebung 64 sind Befestigungsnuten 66 ausgebildet, die zur Befestigung der Abdeckung 50 dienen.

Die Abdeckung 50 stellt eine topfartige Abdeckung oder Haube dar, welche vorzugsweise als Tiefziehteil aus Blech geformt wird, wobei die Abdeckung 50 eine Höhe aufweist, die in etwa der Länge entspricht, um die der Rastblock 56 zur Entrastung des Teleskoplenkers 12 in den Führungsnuten 60 verschoben werden muss bzw. aus dem Inneren des Gehäuses 10 herausgezogen werden muss. Die Öffnung der Abdeckung 50 ist derart bemessen, dass sie die Erhebung 64 umschließt, wobei der Rand der Öffnung der Abdeckung 50 Bördelungen 68 aufweist, die in die an den Seiten der Erhebung 64 ausgebildeten Befestigungsnuten 66 eingreifen. Durch entsprechendes Aufpressen der Abdeckung 50 auf die Öffnung 62 wird erreicht, dass die Bördelungen 68 in die Befestigungsnuten 66 einrasten und die gesamte Rasteinrichtung 46 an dem Gehäuse 10 fixieren. Die Kombination von Bördelungen 68 und Befestigungsnuten 66 ermöglichen das Fixieren der Rasteinrichtung 46 ohne der Verwendung von Verschraubungen, wobei alle für den Mechanismus und der Befestigung der Rasteinrichtung 46 benötigten Ausbildungen an den Gehäuseteilen 14, 16, wie z. B. die Führungsnuten 60, die Befestigungsnuten 66, die Öffnung 62 und die Erhebung 64, während des Schmiedeprozesses vorgenommen werden können, so dass aufwändige Folgeprozesse, wie z. B. Fräsen, eingespart werden.

Der Teleskoplenker 12 weist eine entsprechend dem Rastblock 56 ausgebildete Einkerbung oder Vertiefung 70, in die der Rastbolzen 52 vorgespannt wird. Das freie Ende 72 des Teleskoplenkers 12 weist eine keilförmige (abgeschrägte) Form auf, so dass beim Einführen des Teleskoplenkers 12 der Rastbolzen 52 angehoben wird und erst wenn dieser die Vertiefung 70 erreicht durch die Vorspannfeder 58 in die Rastposition einrastet. In diesem Zustand ist der Teleskoplenker 12 in dem Gehäuse fixiert. Durch entsprechendes Ziehen am Griff 48 bzw. durch Aufbringen einer Kraft entgegen der Vorspannfeder 58 kann der Rastbolzen 52 aus der Vertiefung 70 herausbewegt bzw. entrastet werden, so dass der Teleskoplenker aus dem Gehäuse 10 gezogen bzw. bewegt werden kann.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten.

## Patentansprüche

1. Gehäuse eines Teleskoplenkers (12) einer Anhängevorrichtung für ein landwirtschaftliches Gerät, mit einer Rasteinrichtung (46) zur Fixierung des Lenkers (12) im Gehäuse (10), wobei das Gehäuse (10) durch einen ersten Gehäuseteil (14) und einen zweiten Gehäuseteil (16) ausgebildet ist, welche miteinander verschweißt sind und einen eine Öffnung (22) aufweisenden Hohlraum (20) zur verschiebbaren Aufnahme des Lenkers (12) bilden, wobei der Hohlraum (20) des Gehäuses (10) durch eine erste und dritte sich gegenüberliegende Seitenwand (24, 28), eine zweite und vierte sich gegenüberliegende Seitenwand (26, 30) und eine der Öffnung (22) gegenüberliegende Abschlusswand (32) ausgebildet ist, wobei der erste Gehäuseteil (14) einen die Abschlusswand (32) des Hohlraums (20) enthaltenen Anschlussbereich (34) für das Gehäuse (10) umfasst, wobei die erste und dritte Seitenwand (24, 28) einen größeren Abstand zueinander aufweisen als die zweite und vierte Seitenwand (26, 30), wobei eine den ersten und den zweiten Gehäuseteil (14, 16) verbindende Schweißnaht (18, 18', 18") entlang der ersten, zweiten und dritten Seitenwand (24, 26, 28) verläuft, wobei eine Trennebene zwischen den beiden Gehäuseteilen (14, 16) im Wesentlichen in Richtung einer Längsachse (44) des Gehäuses (10) ausgebildet ist und wobei die Längsachse (44) des Gehäuses (10) senkrecht zu der ersten und dritten Seitenwand (24, 28) verläuft, **dadurch gekennzeichnet, dass** der erste Gehäuseteil (14) Teilbereiche der ersten und der dritten Seitenwand (24, 28) sowie die vierte Seitenwand (30) und den Anschlussbereich (34) bildet und der zweite Gehäuseteil (16) Teilbereiche der ersten und der dritten Seitenwand (24, 28) sowie die zweite Seitenwand (26) bildet.

2. Gehäuse nach Anspruch 1, **dadurch gekennzeichnet, dass** die Trennebene im Bereich des Anschlussbereichs (34) außermittig des Anschlussbereichs (34) verläuft, so dass im Bereich des Anschlussbereichs (34) die Schweißnaht (18, 18', 18") zwischen der zweiten Seitenwand (26) und dem Anschlussbereich (34) seitlich des Anschlussbereichs (34) angeordnet ist.

3. Gehäuse nach Anspruch 1 oder 2, **dadurch gekennzeichnet, dass** an einer der Seitenwände (24) des Hohlraums (20) eine Öffnung (62) für die Rasteinrichtung (46) vorgesehen ist, wobei die Öffnung (62) von einer sich nach außen erstreckenden und mit wenigstens einer Befestigungsnut (66) versehenen Erhebung (64) umgeben ist.

4. Gehäuse nach Anspruch 3, **dadurch gekennzeichnet, dass** die Rasteinrichtung (46) eine Abdeckung (50) mit einem eine Bördelung (68) aufweisenden Rand umfasst, wobei die Bördelung (68) in die Befestigungsnut (66) eingreift und die Rasteinrichtung (46) an der Erhebung (64) fixiert.

5. Gehäuse nach Anspruch 4, **dadurch gekennzeichnet, dass** die Rasteinrichtung (46) einen federvorgespannten Rastbolzen (52) umfasst, welcher in der Abdeckung (50) gelagert ist.

6. Gehäuse nach Anspruch 5, **dadurch gekennzeichnet, dass** ausgehend von der Öffnung (62) für die Rasteinrichtung (46) Führungsnuten (60) an den Seitenwänden (26, 30) des Hohlraums (20) ausgebildet sind, in denen der Rastbolzen (52) verschiebbar gelagert ist.

7. Gehäuse nach Anspruch 6, **dadurch gekennzeichnet, dass** die Öffnung (62) für die Rasteinrichtung (46) auf der ersten Seitenwand (24) und die Führungsnuten (60) an der zweiten und vierten Seitenwand (26, 30) ausgebildet sind.

8. Gehäuse nach einem der vorhergehenden Ansprüche, **dadurch gekennzeichnet, dass** das Gehäuse (10) an seinem Anschlussbereich (34) mit einem Lenker (36) verschweißt ist.

## Claims

1. Casing of a telescopic guide (12) of a towing mechanism for an agricultural implement, with a latching device (46) for fixing the guide (12) in the casing (10), wherein the casing (10) is formed by a first casing part (14) and a second casing part (16) which are welded to each other and form a cavity (20), which has an opening (22), for the displaceable accommodating of the guide (12), wherein the cavity (20) of the casing (10) is formed by a first and third, opposite side wall (24, 28), a second and fourth, opposite side wall (26, 30) and an end wall (32) opposite the opening (22), wherein the first casing part (14) comprises a connecting region (34) for the casing (10), which connecting region contains the end wall (32) of the cavity (20), wherein the first and third side walls (24, 28) are at a greater distance from each other than the second and fourth side walls (26, 30), wherein a weld seam (18, 18', 18") which connects the first and second casing parts (14, 16) runs along the first, second and third side walls (24, 26, 28), wherein a separating plane between the two casing parts (14, 16) is formed substantially in the direction of a longitudinal axis (44) of the casing (10), and wherein the longitudinal axis (44) of the casing (10) runs perpendicularly to the first and third side walls (24, 28), **characterized in that** the first casing part (14) forms subregions of the first and third side walls (24, 28) and also the fourth side wall (30) and the connecting region (34), and the second casing part (16) forms subregions of the first and third side walls (24, 28) and also the second side wall (26).

2. Casing according to Claim 1, **characterized in that**, in the region of the connecting region (34), the separating plane runs eccentrically with respect to the connecting region (34) such that, in the region of the connecting region (34), the weld seam (18, 18', 18") between the second side wall (26) and the connecting region (34) runs at the side of the connecting region (34).

3. Casing according to Claim 1 or 2, **characterized in that** an opening (62) for the latching device (46) is provided on one of the side walls (24) of the cavity (20), with the opening (62) being surrounded by an outwardly extending elevation (64) which is provided with at least one fastening groove (66).

4. Casing according to Claim 3, **characterized in that** the latching device (46) has a covering (50) with an edge which has a flanged portion (68), the flanged portion (68) engaging in the fastening groove (66) and fixing the latching device (46) on the elevation (64).

5. Casing according to Claim 4, **characterized in that** the latching device (46) comprises a latching bolt (52) which is prestressed by a spring and is mounted in the covering (50).

6. Casing according to Claim 5, **characterized in that**, starting from the opening (62) for the latching device (46), guide grooves (60), in which the latching bolt (52) is mounted displaceably, are formed on the side walls (26, 30) of the cavity (20).

7. Casing according to Claim 6, **characterized in that** the opening (62) for the latching device (46) is formed on the first side wall (24), and the guide grooves (60) are formed on the second and fourth side walls (26, 30).

8. Casing according to one of the preceding claims, **characterized in that** the casing (10) is welded at its connecting region (34) to a guide (36).

## Revendications

1. Boîtier d'un guide de télescope (12) d'un dispositif de remorquage pour engin agricole, comprenant un dispositif d'encliquetage (46) pour fixer le guide (12) dans le boîtier (10), le boîtier (10) étant réalisé par une première partie de boîtier (14) et une deuxième partie de boîtier (16), qui sont soudées l'une à l'autre et qui forment un espace creux (20) présentant une ouverture (22) pour recevoir de manière mobile le guide (12), l'espace creux (20) du boîtier (10) étant réalisé par des première et troisième parois latérales opposées (24, 28), des deuxième et quatrième parois latérales opposées (26, 30) et une paroi de terminaison (32) opposée à l'ouverture (22), la première partie de boîtier (14) comprenant une région de raccordement (34) pour le boîtier (10) contenant la paroi de terminaison (32) de l'espace creux (20), les première et troisième parois latérales (24, 28) présentant une plus grande distance l'une de l'autre que les deuxième et quatrième parois latérales (26, 30), un joint de soudure (18, 18', 18") reliant la première et la deuxième partie de boîtier (14 ,16) s'étendant le long des première, deuxième et troisième parois latérales (24, 26, 28), un plan de séparation entre les deux parties de boîtier (14, 16) étant réalisé essentiellement dans la direction d'un axe longitudinal (44) du boîtier (10) et l'axe longitudinal (44) du boîtier (10) s'étendant perpendiculairement aux première et troisième parois latérales (24, 28), **caractérisé en ce que** la première partie de boîtier (14) forme des régions partielles des première et troisième parois latérales (24, 28) ainsi que la quatrième paroi latérale (30) et la région de raccordement (34), et la deuxième partie de boîtier (16) forme des régions partielles des première et troisième parois latérales (24, 28) ainsi que la deuxième paroi latérale (26).

2. Boîtier selon la revendication 1, **caractérisé en ce que** le plan de séparation s'étend dans la région de la région de raccordement (34) de manière excentrée par rapport à la région de raccordement (34), de sorte que dans la région de la région de raccordement (34), le joint de soudure (18, 18', 18") soit disposé entre la deuxième paroi latérale (26) et la région de raccordement (34) latéralement à la région de raccordement (34).

3. Boîtier selon la revendication 1 ou 2, **caractérisé en ce qu'**une ouverture (62) pour le dispositif d'encliquetage (46) est prévue sur l'une des parois latérales (24) de l'espace creux (20), l'ouverture (62) étant entourée par un rehaussement (64) s'étendant vers l'extérieur et pourvu d'au moins une rainure de fixation (66).

4. Boîtier selon la revendication 3, **caractérisé en ce que** le dispositif d'encliquetage (46) comprend un recouvrement (50) avec un bord présentant une bordure (68), la bordure (68) venant en prise dans la rainure de fixation (66) et fixant le dispositif d'encliquetage (46) sur le rehaussement (64).

5. Boîtier selon la revendication 4, **caractérisé en ce que** le dispositif d'encliquetage (46) comprend un boulon d'encliquetage (52) précontraint par ressort, qui est monté dans le recouvrement (50).

6. Boîtier selon la revendication 5, **caractérisé en ce qu'**à partir de l'ouverture (62) pour le dispositif d'encliquetage (46), des rainures de guidage (60) sont réalisées sur les parois latérales (26, 30) de l'espace creux (20), dans lesquelles le boulon d'encliquetage (52) est monté de manière à pouvoir coulisser.

7. Boîtier selon la revendication 6, **caractérisé en ce que** l'ouverture (62) pour le dispositif d'encliquetage (46) est disposée sur la première paroi latérale (24) et les rainures de guidage (60) sont réalisées sur les deuxième et quatrième parois latérales (26, 30).

8. Boîtier selon l'une quelconque des revendications précédentes, **caractérisé en ce que** le boîtier (10) est soudé à un guide (36) au niveau de sa région de raccordement (34).
